# EUROPEAN PATENT APPLICATION

(11) **EP 2 401 926 A1**
(43) Date of publication of application: **04.01.2012**
(21) Application number: 10167692.2
(22) Date of filing: 29.06.2010
(51) Int. Cl.: A23P 1/12, A23L 1/00, A21D 13/00

(54) **Method for making a multilayered food product and corresponding product**

(71) Applicant: Nestec S.A., 1800 Vevey (CH)
(72) Inventor: Vardi, Ishay, 79280, SHTULIM (IL); Tsalaf, Alex, 89070, ARAD (IL)
(74) Representative: Rossand, Isabelle

(57) **Abstract**

The present invention relates to a method for providing a cooked multilayered food product, the method comprises the steps of: providing a food base product; and subjecting the food base product to a cooking extrusion process through a multilayer shaped extrusion die providing a cooked multilayered food product with controlled expansion.

## Description

### Technical field of the invention

The present invention relates to the production of multilayered food products and more particularly to a method for the production of a multilayered food product where expansion of the multilayered food products is controlled,

### Background of the invention

Multilayered products are found in many different food industries such as cereals, puff pastry, sugar wafer sticks, and snacks. Many prior art processes have been developed to address the complexities of layering each of these products.

One technology which is found to be very suitable in the production of such multilayered products is extrusion. Traditionally, extruded multilayered products are produced by extruding separate layers in a flow path and then subsequently the layers are combined when necessary to form the final product.

An alternative method involves a pre-shaped extrusion processes. US 2008/0199569 disclose a method and an apparatus for producing a rolled snack piece using an extruder having a plurality of spiral shaped orifices through which an extrudate exits the extruder, When a desired length of extrudate stream or rope protrudes from an orifice, it is cut at its base, thus producing individual snack pieces that appear to have been rolled after being sheeted. The snack pieces is then cooked, typically by frying, and are then seasoned and packaged by methods previously known in the art. However, in order to produce the snacks, the uncooked mix must go through several process steps (extrusion, cutting, cooking and seasoning) to form the final product. The multiple process steps and the post extrusion cooking makes it difficult to control the expansion of the rolled snack piece, and the method results in expansion of the rolled snack piece, which changes the shape of the product and makes the shape of the product less reproducible.

Furthermore, US 4,569,848 describes a snack-type confectionary product which comprises a hollow, substantially tubular body, made of extruded cooked biscuit with particular characteristics of lightness, crispness and digestibility, with the ends closed or open. The biscuit is stuffed with more or less fluid cream with or without grains and fruit, possibly covered with chocolate and grains of various kinds, The process described for providing the snack-type confectionary product involves high temperature cooking extrusion of said biscuit, as well as subsequent operational phases for completing the product. The high pressure difference between the inside and the outside of the extruder die brings the expanded hallow body of the confectionary product Thus, as the snack-type confectionary product is highly expanded the shape of the product is changed compared to the shape of the extruder orifice which cause the shape of the product becomes less reproducible and it may be difficult to provide uniform and controlled products,

As it has been found that consumers mainly choose food products, and in particular confectionary products, based on the shape, it is of interest to control the shape of the final food product produced,

### Summary of the invention

Accordingly, one aspect of the present invention relates to a method for providing a cooked multilayered food product, the method comprises the steps of:
(i) Providing a food base product;
(ii) Subjecting the food base product to a cooking extrusion process through a multilayer shaped extrusion die providing a cooked multilayered food product.

Another aspect of the present invention relates to a cooked multilayered food product comprising substantial individual layers of the cooked multilayered food product.

### Brief description of the figures

Figure 1 shows different shapes of the orifice (figure 1a-1d),
Figure 2 shows examples of an extrusion die.
Figure 3 shows examples of the final products.

The present invention will now be described in more detail in the following.

### Detailed description of the invention

As mentioned it has been found that consumers often choose food products, and in particular confectionary products, based on the shape. Therefore, it is of interest to control the shape of the final food product produced. Thus there is provided a method for providing a cooked multilayered food product which is controlled in respect of expansion whereby the shape of the product is maintained directly from the extruder orifice, This control of the shape of the cooked multilayered food product may preferably be obtained by the present invention by instant creation of the shape directly from the die orifice and subsequently retained.

Additionally, a product produced by the present invention may be improved with respect to crispiness, texture, such as a improved flaky texture, and mouth feel.

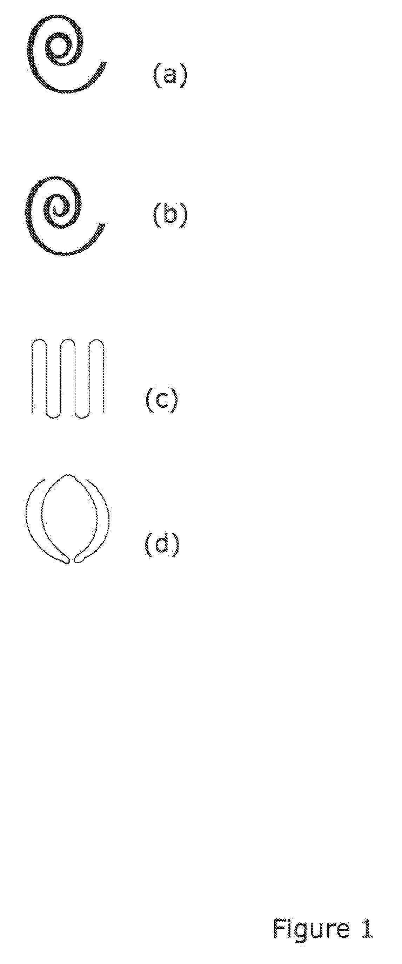

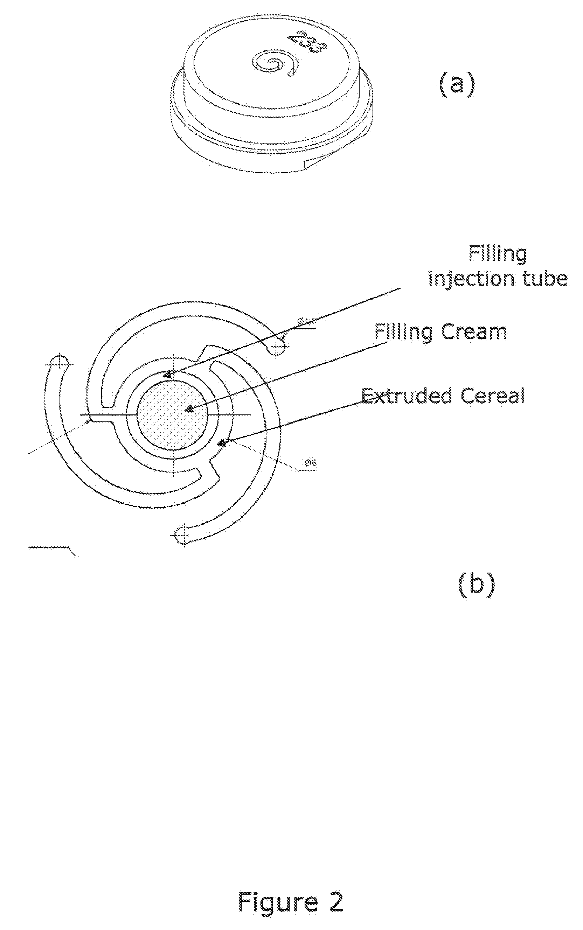

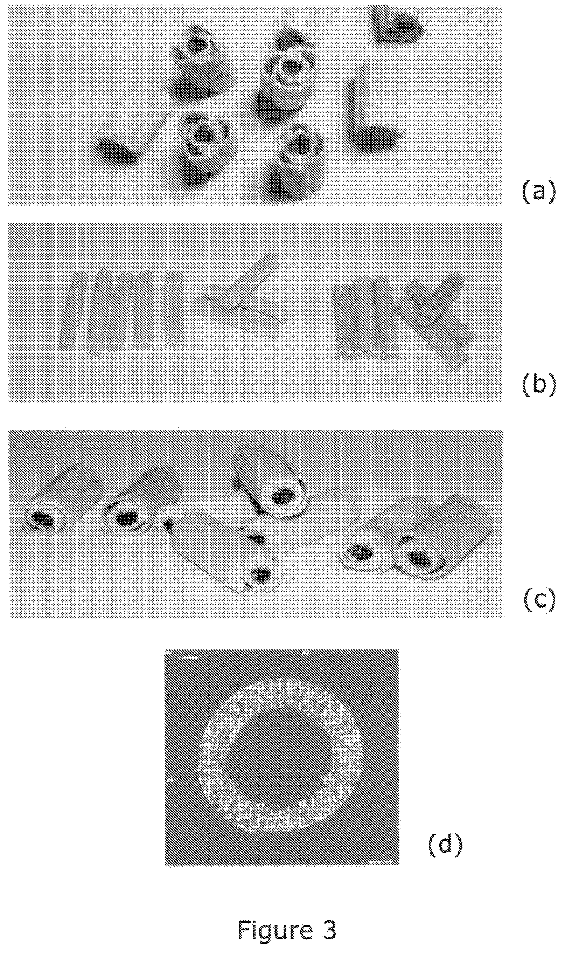

The present invention describes a single step operation that creates a cooked multilayered food product with a wide variety of cross sectional geometries. Some examples are given in Figure 1. Figure 1(a) represents a spiral shape with a closed centre section. Figure 1(b) represents a spiral shape with an open centre section. Figure 1(c) represents a layer-by-layer shape. Figure 1(d) represents a shell shape, A representation of such a final product can be seen in Figure 3(a). Figure 2(a) is a representation of an extruder die with a multilayer shaped spiral type orifice providing a final product as illustrated in figure 3(b). Figure 2(b) is a representation of an extruder die with a multilayer shaped leaves type orifice providing a final product as illustrated in figure 3(a)

In order to produce such shapes, the extrudate must show limited expansion after exiting the extruder die,

Control and restriction of expansion can be achieved by combinations of several features, such as making the orifice in the extruder die thinner, reduce the energy supple to the food base product by low screw speed, use of higher levels of extrusion water and/or oil, and use of expansion restricting ingredients in the food base product, such as fibres, lecithin, protein and sugar.

The inventors of the present invention have surprisingly found that by controlling the expansion of the extrudate using the methods above combined with cooking extrusion, the food base product can be passed through complex extruder die shapes to form complex cooked multi-layered shapes of food products, in one processing step. Forming cooked multilayer food products of this format has until now been a more complex process involving rotting, folding or combining of several layers. The immediate cooking is crucial for fixing the geometry before it collapses and/or expand uncontrolled when exiting the extruder die.

In the present context the term "controlled expansion relates to a process where the process parameters are set to obtain the desired expansion of the cooked multilayered food product. Preferably, the expansion of the cooked multilayered food product is controlled in a manner which results in a restricted expansion or substantival no expansion.

If desired, the product can be filled, preferably centre filled, with an appropriate filling. Preferably, the center filled products can be achieved by co-extrusion of the cooked multilayered food product with the appropriate filling.

The present invention relates to a method for providing a cooked multilayered food product, the method comprises the steps of:
(i) Providing a food base product;
(ii) Subjecting the food base product to a cooking extrusion process through a multilayer shaped extrusion die providing a cooked multilayered food product.

The method according to the present invention is very effective, quick, the products may be immediately ready to eat or immediately ready for distribution, and the method involves less handling steps compared to traditionally used methods (or even a minimum of handing).

In one embodiment of the present invention, the multilayer shaped orifice of the extrusion die and the cooked multilayered food product is one continuous phase,

The inventors of the present invention found that in order to control expansion of the cooked multilayered food produce the screw speed, feed rate and pressure before exiting the extruder die may be controlled and adjusted to control avoid or reduce expansion of the cooked multilayered food product.

As mentioned above, expansion of the multilayered food product may be controlled by controlling or adjusting one or more of;
(i) the orifice thickness of the extruder die;
(ii) the energy supplied to the food base product, e.g. by reducing screw speed, feed rate of the food base product and reduce the pressure before exiting the extruder die;
(iii) the temperature of the food base product;
(iv) the temperature of the cooking extruder;
(v) the temperature of the food product;
(vi) the levels of extrusion water and/or oil; and
(vii) the use of expansion restricting ingredients in the food base product.

This list are just examples of parameters which may be adjusted to control expansion of the multilayered food product and the skilled person would be able to find and select other parameters not mentioned above which may reduce or control expansion of the multilayered food product described herein. Such other features are also included in the present invention as the above list is a non-exhaustive and non-limiting list.

The skilled person would easily recognise that individual parameters may be changed within the stated ranges depending on the type of food product to be produced. Furthermore, the skilled person would easily recognise that the parameters may be combined in many different ways to control expansion of the multilayered food product.

In an embodiment of the present invention, the cooking extrusion process is conducted at a speed providing a feed flow rate in the range of 5-100 m/min, such as 10-75 m/min, e.g. 12-60 m/min.

In yet an embodiment of the present invention the cooking extrusion process is conducted at a speed providing a feed flow rate in the range of 80-600 kg food base product/hour, such as 80-300 kg food base product/hour, e.g. 80-150 kg food base product/hour, such as 100-130 kg food base product/hour, e.g. 200-550 kg food base product/hour, such as 300-500 kg food base product/hour.

The feed flow rate may differ dependent on the type of food product to be produced. An example of this is that a confectionery produce in particular a sweet confectionary product, may have a feed flow rate in the range of 100-140 kg food base product/hour, such as in the range of 110-130 kg food base product /hour. However, in the case of a savoury product the feed flow rate may preferably be 90-110 kg food base product /hour, such as about 100 kg food base product /hour.

When providing food products by extrusion, the food base product may be subjected to large pressures when the food base product is forced through the orifice of the extruder die. In an embodiment of the present invention the pressure on the food base product before exiting the extruder die is in the range of 50-150 bar, such as in the range of 70-140 bar, e.g. 75-125 bar, such as 90-100 bar, e.g. 75-90 bar.

In one embodiment of the present invention, the cooking extrusion process is conducted at a temperature above 75°C, such as above 100°C, e.g. above 125°C, such as above 150C. Preferably the cooking extrusion process is conducted at a temperature in the range of 75-200°C, such as in the range of 100-180°C, e.g. in the range of 125.175°C, such as in the range of 150-175°C.

In another embodiment of the present invention, the cooked multilayered food product has a controlled expansion relative to the multilayer shaped orifice of the extrusion die. This control may be obtained by adjusting and setting the parameters described above.

In an embodiment of the present invention, expansion (and even extensive expansion) may be acceptable, however, only within restricted and controlled conditions whereby uniform shapes may be provided and reproduced, Furthermore, it may be essential that the cooked multilayered food product comprises substantial individual layers.

In still another embodiment of the present invention, the cooked multilayered food product has a restricted expansion relative to the multilayer shaped orifice of the extrusion die. Preferably; the restricted expansion of the food product according to the present invention is less than 10% relative to the multilayer shaped orifice of the extrusion die, such as less than 5% relative to the multilayer shaped orifice of the extrusion die, e.g. less than 1% relative to the multilayer shaped orifice of the extrusion die.

In the present context the expansion relative to the multilayer shaped orifice of the extrusion die relates to the difference in shape, such as product shape, product volume and wall size, between the extruder orifice and the extruded food product.

In an embodiment of the present invention, the food base product before reaching the extruder die has a base product temperature below 75°C, such as a temperature below 50°C, e.g. a temperature below 25°C, such as a temperature below 15°C, Preferably the food base product before reaching the extruder die has a base product temperature in the range of 5-75°C, such as in the range of 15-60°C, e.g. in the range of 20-50°C, such as in the range of 30-40°C, e.g. in the range of 50-75°C,

In the present context the term food base product" relates to the dough mixture before any cooking is performed in the extruder.

In one embodiment of the present invention, the extruder and/or the extruder die may have a temperature of at least 75°C, such as at least 100°C, e.g, at least 125°C, such as at least 150°C. Preferably the temperature of the extruder and/or the extruder die in the range of 75-200°C, such as in the range of 100-180°C, e.g. in the range of 125-175°C, such as in the range of 150-175°C.

In another embodiment of the present invention, the product temperature before die exit or orifice exit may have a temperature of at least 75°C, such as at least 100°C, e.g. at least 125°C_{,} such as at least 150°C. Preferably, the product temperature before exit is in the range of 75-200°C, such as in the range of 100-180°C, e.g. in the range of 125-175°C, such as in the range of 150-175°C,

In another embodiment of the present invention, the method may be a continuous process.

In yet another embodiment of the present invention, the cooked multilayered food product emerging from the multilayer shaped orifice of the extrusion die are cut into uniform pieces, preferably the cutting is performed continuously.

The water present in the food base product may upon heating/cooking evaporate and thus, cause expansion of the food base product and/or the cooked multilayered food product. Thus, in an embodiment of the present invention, the cooked multilayered food product has a water content in the range of 2-15% (w/w), such as in the range of 4-13% (w/w), e.g. in the range of 5-10% (w/w), such as in the range of 8-13% (w/w), e.g. in the range of 5-8% (w/w).

The cooked multilayered food product may be a confectionary product, such as a sweet confectionary product, or a savoury product.

In an embodiment of the present invention the cooked multilayered food product, preferably a sweet confectionary cooked multilayered food product, having a water content of about 5% and is produced by applying a feed rate of 105-115 kg/hr (preferably about 110 kg/hr), a screw speed of 250-270 rpm (preferably about 260 rpm), a temperature of the food base product of 170-175°C (preferably about 172°C) and/or a pressure of the food base product of 77-82 bar (preferably about 79 bar).

In yet an embodiment of the present invention the cooked multilayered food product, preferably a sweet confectionary cooked multilayered food product, having a water content of about 5% and is produced by applying a feed rate of 105-115 kg/hr (preferably about 110 kg/hr), a screw speed of 250-270 rpm (preferably about 260 rpm), a temperature of the food base product of 165-175°C (preferably about 170°C) and/or a pressure of the food base product of 74-78 bar(preferably about 76 bar).

In yet a further embodiment of the present invention the cooked multilayered food product, preferably a sweet confectionary cooked multilayered food product, having a water content of about 7.5% and is produced by applying a feed rate of 120-140 kg/hr (preferably about 130 kg/hr), a screw speed of 390-410 rpm (preferably about 400 rpm), a temperature of the food base product of 185-190°C (preferably about 187°C) and/or a pressure of the food base product of 67-71 bar (preferably about 69 bar).

In an embodiment of the present invention the cooked multilayered food product, preferably a savoury cooked multilayered food product, having a water content of about 12.5% and is produced by applying a feed rate of 90-110 kg/hr (preferably about 100 kg/hr), a screw speed of 310-330 rpm (preferably about 320 rpm), a temperature of the food base product of 110-120°C (preferably about 116°C) and/or a pressure of the food base product of 135-145 bar (preferably about 139 bar).

In an embodiment of the present invention the cooked multilayered food product, preferably a savoury cooked multilayered food product, having a water content of about 11.5% and is produced by applying a feed rate of 90-110 kg/hr (preferably about 100 kg/hr), a screw speed of 340-360 rpm (preferably about 350 rpm), a temperature of the food base product of 120- 130°C (preferably about 124°C) and/or a pressure of the food base product of 87-91 bar (preferably about 89 bar).

In another embodiment of the present invention, the method does not involve separate actions for forming the cooked multilayered food product Such actions may be folding, rolling, assembling etc.

In yet another embodiment of the present invention, the cooked multilayered food product may be subjected to cooling to maintain and quickly fix the shape of the cooked multilayered food product.

In the present context, the term "cooking" relates the process of preparing a food product by applying heat to the base food product to obtain the cooked multilayered food product, The process of cooking is different from e.g. drying, In the present context the term drying relates to removal of excessive water from the cooked multilayered food product.

One aspect of the present invention relates to a cooked multilayered food product comprising substantial individual layers of the cooked multilayered food product. Examples of shapes of such cooked multilayered food products are given in Figure 3. Figure 3(a) represents an example of a leaves type product with a centre filling, Figure 3(b) represents an example of a spiral type product without a centre filing. Figure 3(c) represents an example of a spiral type product with a centre filming. Figure 3(d) shows a cut through a 3-dimerisional tomography image of a circular type product, where the centre of the circular type product could be filled. The image shows well the porosity and the layered structure of the cooked product. In one embodiment of the present invention, there is no contact between the individual layers of the cooked multilayer food product. In the present context the term "individual layers" relates to continuous layers of the same piece without any contact between the individual layers.

In yet an embodiment of the present invention the cooked multilayer food product comprises substantial individual layers, In the present context the term "substantial individual layers" relates to two or more continuous layers of the same piece being partly attached in a limited manner. This "partly attached in a limited manner" relates to a part of the surface area of one individual layer may be attached to the surface area of another individual layer of the same piece. In an embodiment of the present invention less than 50% of the surface area of one individual layer may be attached to at least one of the other individual layers of the same piece, such as less than 40%, such as less than 30%, such as less than 20%, preferably less than 15%, such as less than 10%, preferably less than 9%, such as less than 5% of the surface area of one individual layer may be attached to at least one of the other individual layers of the same piece.

In an embodiment of the present invention the term "attached to" relates to two individual layers from the same piece which are connected and joined together. In an embodiment of the present invention the term "attached to" does not imply that the individual layers cannot be lying above each other touching.

In the context of the present invention, the term "piece" relates to the cooked multilayer food product comprising at least 2 individual or at least 2 substantial individual layers,

In one preferred embodiment the cooked multilayer food product may be filled with an appropriate filling. The product may be centre filled with an appropriate filling, In yet an embodiment of the present invention at least 3% of the cross sectional area of the middle zone, taken perpendicular to the longitudinal axis of the cooked multilayered food product and limited by the outer layer(s), may be filled with the appropriate filing, such as at least 10%, preferably 25%, such as at least 50%, preferably 60%, such as at least 70%, preferably 80%, such as at least 90%, of the cross sectional area of the middle zone may be filled with the appropriate felling,

In a preferred embodiment of the present invention the cooked multilayered food product may comprise alternating layers of cooked multilayered food product and air. Preferable, the cooked multilayered food product may have a center filling surrounded by alternating layers of cooked multilayered food product and air.

It has been found that the cooked multilayered food product produced by conventional cooking extrusion methods (such as a product as described in US 2008/0199569) are not always suitable for being filled with a filling because of the expansion that occurs with conventional produced cooked multilayered food products does not provide a continuous internal cavity for holding the filling, however, a network of walls and cavities are formed which are difficult to fill. On the contrary, in accordance with the present invention, the extruded cooked multilayered food product has a controlled expansion which leaves a continuous internal cavity suitable for holding the filling.

In a preferred embodiment of the present invention, the cooked multilayered food product may be one single continuous piece.

In still another embodiment of the present invention, the cooked multilayered food product has:
(i) a porosity in the range of 55-70%; and/or
(ii) a mean wall thickness of 60-11.0 µm.

In an embodiment of the present invention the porosity of the cooked multilayered food product is in the range of 55-70%, such as in the range of 60-70%, e.g. in the range of 55-60%, Preferably, cooked multilayered food products like sugar wafers have a porosity according to the present invention which is in the range of 60-70%.

In the context of the present invention the term "porosity" relates to is a measure of the void spaces in a material, and is presented as a fraction of the volume of voids over the total volume as a percentage between 0-100%.

In an embodiment according to the present invention the mean wall thickness of the cooked multilayered food product is in the range of 60-110 µm, such as in the range of 65-100 µm, e.g. in the range of 95-105 µm, such as in the range of 65-85 µm. Preferably, cooked multilayered food products like sugar wafers have a mean wall thickness according to the present invention which is in the range of 65-85 µm

In yet an embodiment of the present invention the cooked multilayered food product has a porosity in the range of 55-70%, such as in the range of 60-70%, e.g. in the range of 55-60% and a mean wall thickness in the range of 60-110 µm, such as in the range of 65-100 µm, e.g. in the range of 95-105 µm, such as in the range of 65-85 µm.

In order to facilitate extrusion of the cooked multilayered food product the food base product may have a water content in the range of 5-25% (w/w), such as in the range of 7-20% (w/w), e.g. in the range of 10-15% (w/w).

It should be noted that embodiments and features described in the context of one of the aspects or one of the embodiments of the present invention also apply to the other aspects or other embodiments of the present invention.

All patent and non-patent references cited in the present application, are hereby incorporated by reference in their entirety.

In the following non-limiting example the invention is described in more detail.

### Examples

### Example 1

A filled confectionery cooked multilayered food product is produced in the shape of tube with 3 wings (a starfish type shape), like cereal layers surrounding the cereal tube.

The extrusion die shape is demonstrated in Figures 2b.

### Method

The individual process parameters of the process are described in the "Table of Process Parameters" below)
1. A drymix of a food base product was prepared by mixing dry powders of the following composition:

| **Raw Material name** | **Quantity (%)** |
|---|---|
| Corn grits | 47.775 |
| Corn Starch | 14.445 |
| Calcium Carbonate | 2.780 |
| Soy Flour | 7.780 |
| Salt, fine granulation | 0.330 |
| Sugar (Crystalline Sucrose) | 20,000 |
| Soy Lecithin (Powdered) | 0.780 |
| Green Pea fibre | 6.110 |
| | |
| **Total** | **100.000** |

2. The dry mix was continuously fed into a twin screw cooking extrusion ;
3. Parapet to the dry mix the extruder was fed with water;
4. Filling sweet cream was fed into the extruded tube as this is a co-extrusion process that produces the final product with the filling inside.
5. The dry mix and water was mixed, cooked, shaped by the extruder and substantial no expansion of the filled confectionery cooked multilayered food product was observed at the extruder die exit. Drying was also occurred at the die exit, bringing the product to around 8% moisture.
6. The product continued on a conveyor about 5 m away into the cutting device.
7. The cut product went through a drying oven to bring it the final moisture that enables a shelf stable product,
8. Packaging was done as the last step of the production.

**Table of Process Parameters:**

| **Process step and parameters** | **Value (Actual)** | **Units** |
|---|---|---|
| **Extrusion** | | |
| No. of barrels | 4 | -- |
| Effective length | 800 | Mm |
| Screw speed | 400 | RPM |
| Dry mix feed | 130 | Kg/hr |
| Water feed | 4,5 | Kg/hr |
| Barrel NO.1 temp. | 44 | °C |
| Barrel No. 2 temp. | 88 | °C |
| Barrel No. 3 temp. | 157 | °C |
| Barrel No. 4 temp. | 170 | °C |
| Material temp. | 187 | °C |
| Material pressure | 69 | Bar |
| Back pressure | 66 | Bar |
| Torque | 41 | % |
| Cream filling | 90 | Kg/hr |
| Product speed | 49 | m/min. |

| **QA** | | |
|---|---|---|
| Moisture (Extrudate + filling) | 7.7 | % |
| Weight of empty tube (20 P.) | 25.8 | Gr |
| Weight of filled tube (20 P.) | 41.5 | gr |
| Length | 30 | Mm |

| **Cutter** | | |
|---|---|---|
| Speed | 1700 | RPM |
| No. of blades | 1 | -- |

| **Dreyer** | | |
|---|---|---|
| Speed | 48.9 | Hz |
| Temp. | 155 | °C |

| **QA** | | |
|---|---|---|
| Moisture | 2.22 | % |

The resulting filled confectionery cooked multilayered food product had the shape as depitched in Figure 3(a) and the following composition:

| | | |
|---|---|---|
| | | |
| Cereal | 62 | % |
| Filling | 38 | % |
| **Total** | **100** | **%** |

## Claims

1. A method for providing a cooked multilayered food product, the method comprises the steps of:
(i) Providing a food base product;
(ii) Subjecting the food base product to a cooking extrusion process through a multilayer shaped extrusion die providing a cooked multilayered food product.

2. A method according to claim. 1, wherein the orifice of the multilayer shaped extrusion die and the cooked multilayered food product is one continuous phase,

3. A method according to any one of claims 1 or 2, wherein the cooking extrusion process is conducted at a temperature in the range of 75-200ºC

4. A method according to any one of claims 1-3, wherein a pressure on the food base product before exiting the extruder is in the range of 50-150 bar.

5. A method according to any one of claims 1-4, wherein the cooking extrusion process is conducted at a speed providing a feed flow rate in the range of 80-150 kg food base product/hour,

6. A method according to any one of claims 1-5, wherein the method is a continuous process,

7. A method according to any one of claims 1-6, wherein the product is filled with an appropriate filling by co-extrusion of the cooked multilayered food product with the appropriate filling.

8. A method according to any one of claims 1-7, wherein the food base product has a water content in the range of 2-15% (w/w).

9. A method according to any one of claims 1-8, wherein the method does not involve separate forming actions like folding, rolling, assembling etc.

10. A cooked multilayered food product obtainable by any one of claims 1-9.

11. A cooked multilayered food product comprising substantial individual layers of the cooked multilayered food product.

12. A cooked multilayered food product according to any one of claims 10 or 11, wherein the cooked multilayered food product is one single continuous piece.

13. A cooked food product according to any one of claims 10-12, wherein the cooked multilayered food product has a:
(i) a porosity of 65-70%; and/or
(ii) a mean wall thickness of 60-110 µm.

14. A cooked multilayered food product according to any one of claims 10-13, wherein the cooked multilayered food product has a controlled expansion relative to the multilayer shaped orifice of the extrusion die,

15. A cooked multilayered food product according to any one of claims 10-14, wherein the cooked multilayered food product has a restricted expansion restive to the multilayer shaped orifice of the extrusion die.
